(19) Europäisches Patentamt
European Patent Office
Office européen des brevets

(11) **EP 4 065 859 B1**

(12) **EUROPÄISCHE PATENTSCHRIFT**

(45) Veröffentlichungstag und Bekanntmachung des Hinweises auf die Patenterteilung:
**01.04.2026   Patentblatt 2026/14**

(21) Anmeldenummer: **20796726.6**

(22) Anmeldetag: **16.10.2020**

(51) Internationale Patentklassifikation (IPC):
*F16G 1/10* (2006.01)   *F16G 5/08* (2006.01)
*D07B 1/00* (2006.01)   *D02G 3/26* (2006.01)
*F16G 5/20* (2006.01)

(52) Gemeinsame Patentklassifikation (CPC):
**F16G 1/10; D02G 3/26; D02G 3/446; D02G 3/447; F16G 5/08; F16G 5/20;** D10B 2331/021

(86) Internationale Anmeldenummer:
**PCT/EP2020/079163**

(87) Internationale Veröffentlichungsnummer:
**WO 2021/104745 (03.06.2021 Gazette 2021/22)**

(54) **ANTRIEBSRIEMEN, VERWENDUNG EINES SOLCHEN ANTRIEBSRIEMENS ALS KEILRIPPENRIEMEN UND HERSTELLUNGSVERFAHREN**

DRIVE BELT, USE OF A DRIVE BELT OF THIS TYPE AS A V-RIBBED BELT, AND PRODUCTION METHOD

COURROIE D'ENTRAÎNEMENT, UTILISATION D'UNE COURROIE D'ENTRAÎNEMENT DE CE TYPE EN TANT QUE COURROIE À NERVURES EN V ET PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2019   DE 102019218579**

(43) Veröffentlichungstag der Anmeldung:
**05.10.2022   Patentblatt 2022/40**

(73) Patentinhaber: **ContiTech Deutschland GmbH 30175 Hannover (DE)**

(72) Erfinder:
• **KANZOW, Henning**
  **30165 Hannover (DE)**
• **DIKMANS, Antonius**
  **30165 Hannover (DE)**
• **TEVES, Reinhard**
  **30165 Hannover (DE)**
• **BONKOWSKI, Manfred**
  **30165 Hannover (DE)**
• **GREINER, Christian**
  **30165 Hannover (DE)**
• **KASAK, Timo Sebastian**
  **30165 Hannover (DE)**

(74) Vertreter: **Preusser, Andrea ContiTech Deutschland GmbH Intellectual Property Philipsbornstraße 1 30165 Hannover (DE)**

(56) Entgegenhaltungen:
**EP-A1- 3 530 783        WO-A1-2006/102641 WO-A1-2018/074471**

**Beschreibung**

Die Erfindung betrifft einen Antriebsriemen gemäß dem Oberbegriff des Patentanspruchs 1. Ferner betrifft die Erfindung eine Verwendung und die Herstellung eines derartigen Antriebsriemens.

Antriebsriemen, insbesondere in Form von Keilrippenriemen für Riemen-Starter-Generatoren in modernen Hybrid- oder Mildhybrid-Fahrzeugen, sind sehr hohen Belastungen ausgesetzt. Daher werden in den letzten Jahren verstärkt Zugstränge in den Grundkörper von Antriebsriemen eingebettet, die Para-Aramid in Kordkonstruktionen aufweisen. Para-Aramidkorde verleihen dem Antriebsriemen eine besonders hohe Zugfestigkeit, Dimensionsstabilität und Längssteifigkeit.

So offenbaren beispielsweise WO 2006/102641 A1 und WO 2012/143241 A1 jeweils Antriebsriemen mit Zugsträngen aus Para-Aramid in Kordkonstruktionen. Jeder Zugstrang weist gezwirnte Litzen auf, die jeweils aus wenigstens einem gezwirnten Garn gebildet sind. Dabei ist die Drehrichtung der jeweiligen Litze der Drehrichtung des Kordes entgegengesetzt.

Als Garn wird im Rahmen der vorliegenden Anmeldung jedes linienförmige Gebilde bezeichnet, das aus textilen Faserstoffen hergestellt ist. Derartige Faserstoffe können Fasern, insbesondere Spinnfasern oder Filamente sein. Filamente bezeichnen insbesondere Fasern, die mindestens eine Länge von 1000 mm aufweisen. Eine Litze ist wiederum aus einem oder mehreren Garnen gebildet.

Vorzugsweise erfolgt die Bildung von Litzen durch Verdrehen eines oder mehrerer Garne. Dieses Verdrehen wird auch Zwirnen genannt. Eine Verdrehung von ungezwirnten Garnen bzw. eines ungezwirnten Garns wird als Vorzwirn bezeichnet. Das Ergebnis eines Vorzwirns kann eine Litze sein. Das Verdrehen ein oder mehrerer Vorzwirne, beispielsweise einer oder mehrerer Litzen, ergibt den Auszwirn. Ein Kord bzw. ein Zugstrang aus ein oder mehreren Litzen kann Ergebnis des Auszwirns sein.

Im Folgenden wird der Begriff "Kord" als synonym für 2-stufig gedrehte Korde verwendet. Diese Korde weisen zusammen verdrehte Litzen auf, wobei die Drehung als "Auswzirn" bezeichnet wird. Die Litzen sind wiederum durch das Verdrehen von einem oder mehreren Garnen gebildet. Deren Drehung wird als "Vorzwirn" bezeichnet.

Im Stand der Technik wurde erkannt, dass die Art und Weise der Drehung bzw. Zwirnung des Vorzwirns und des Auszwirns maßgeblich die Eigenschaften eines Antriebsriemens beeinflussen können. Daher wurde im Stand der Technik bereits ein Zwirnfaktor definiert, wobei erkannt wurde, dass dem Verhältnis zwischen dem Zwirnfaktor der Litzen und dem Zwirnfaktor der Korde eine hohe Bedeutung im Hinblick auf die Eigenschaften eines späteren Antriebsriemens zukommt. Die Vorveröffentlichungen WO 2006/102641 A1 und WO 2012/143241 A1 nutzen unterschiedliche Formeln zur Berechnung des Zwirnfaktors bzw. Twist Multiplier. Im Rahmen der vorliegenden Anmeldung wird auf die Berechnung nach WO 2006/102641 A1 zurückgegriffen. Der Zwirnfaktor TM berechnet sich demnach wie folgt:

$$TM = \frac{TPM/39,4}{\sqrt{5905/T}}$$

Dabei bezeichnet TM den Zwirnfaktor, TPM den Drall in Drehungen pro Meter (turns per meter) und T die Garnfeinheit bzw. den Titer in der Einheit dtex.

Aus WO 2018/074471 A1 und EP 3 530 783 A1 ist ein Antriebsriemen mit in Kordkonstruktion eingebetteten Zugsträngen bekannt, wobei allerdings der Zwirnfaktor nach einer andern Formel berechnet wird und daher vom übrigen Stand der Technik abweichende Werte aufweist.

Obwohl die bekannten Antriebsriemen bereits eine hohe Zugfestigkeit, Dimensionsstabilität und Längssteifigkeit aufweisen, werden im Zuge der Weiterentwicklung der Fahrzeugtechnologie, insbesondere für Riemen-Starter-Generatoren, höhere Anforderungen an die Antriebsriemen gestellt. So hat sich gezeigt, dass auch Antriebsriemen mit Zugsträngen aus Para-Aramid im Betrieb vergleichsweise schnell reißen können. Dies gilt insbesondere bei dynamischer Beanspruchung, die bei Riemen-Starter-Generatoren besonders hoch ist. Darüber hinaus haben Zugstränge von Antriebsriemen, die einer hohen dynamischen Belastung ausgesetzt sind, die Tendenz, sich aus der ungeschützten Riemenkante auszuspulen. Dies hat im Betrieb oft eine Zerstörung des Riemens zur Folge.

Antriebsriemen werden üblicherweise als kontinuierlicher Schlauch hergestellt und anschließend in einzelne Riemenabschnitte geschnitten. Damit wird sichergestellt, dass der Antriebsriemen selbst nahtfrei bleibt und damit eine hohe Stabilität aufweist. Antriebsriemen mit Zugsträngen, die aus Para-Aramid bestehen, lassen sich jedoch sehr schlecht schneiden. Die Schnittkanten der Antriebsriemen sehen oft flusig aus, was von Kunden als Mangel bewertet wird. Weiterhin wurden bei Überlasttests bei ansonsten vergleichbaren Riemen (mit identischen Para-Aramidkorden) tendenziell kürzere Laufzeiten bei den Riemen beobachtet, bei denen die Schnittkanten auffällig flusig ausgefallen waren.

Vor diesem Hintergrund der gestiegenen Anforderungen an Antriebsriemen, insbesondere hinsichtlich dessen Stabilität bei hoher dynamischer Beanspruchung, dessen Widerstand gegen das Ausspulen von Zugsträngen sowie im Hinblick auf eine ästhetisch ansprechende Riemenkante bestand also ein Bedarf zur Weiterentwicklung.

Grundlage der Weiterentwicklung ist die Aufgabe, einen Antriebsriemen anzugeben, bei dem ein Ausspulen der Zugstränge bei hoher dynamischer Beanspruchung und bei hoher Lastübertragung vermieden wird, welcher außerdem eine hohe Standfestigkeit aufweist, wobei insbesondere ein Reißen des Antriebsriemens vermieden wird, und der eine flusenarme Riemenkante besitzt, d.h. sich im Produktionsprozess flusenarm schneiden lässt. Ferner ist es Aufgabe der Erfindung, die Verwendung eines solchen Antriebsriemens als Keilrippenriemen sowie ein Verfahren zur Herstellung eines solchen Antriebsriemens anzugeben.

Erfindungsgemäß wird diese Aufgabe im Hinblick auf den Antriebsriemen durch den Gegenstand des Patentanspruchs 1, im Hinblick auf die Verwendung durch den Gegenstand des Patentanspruchs 12 und im Hinblick auf das Herstellungsverfahren durch den Gegenstand des Patentanspruchs 13 gelöst.

So beruht die Erfindung auf dem Gedanken, einen Antriebsriemen mit einem Grundkörper anzugeben, in den ein oder mehrere Zugstränge aus Para-Aramid in Kordkonstruktion eingebettet sind. Jeder Zugstrang weist gezwirnte Litzen auf, die jeweils aus wenigstens einem gezwirnten Garn gebildet sind. Dabei ist die Drehrichtung der jeweiligen Litze der Drehrichtung des Kordes entgegengesetzt. Erfindungsgemäß weisen die Zugstränge jeweils wenigstens vier Litzen auf, wobei der Zwirnfaktor TM1 der Litzen (Vorzwirn) zwischen 4,5 und 5,4 und der Zwirnfaktor TM2 des Kordes (Auszwirn) zwischen 2,7 und 3,8 beträgt. Das Verhältnis des Zwirnfaktors der Litzen (Vorzwirn) zum Zwirnfaktor des Kordes (Auszwirn) beträgt erfindungsgemäß zwischen 1,3 und 1,5.

Durch eine Vielzahl von Versuchen und Langzeittests hat sich gezeigt, dass der erfindungsgemäße Antriebsriemen gegenüber den Antriebsriemen aus dem Stand der Technik deutlich verbesserte Eigenschaften aufweist und damit den gestiegenen Anforderungen an Antriebsriemen für moderne Riemenstartergeneratoren bzw. Hybridfahrzeuge gewachsen ist.

Die Nutzung von jeweils wenigstens vier Litzen für den Zugstrang bewirkt im Unterschied zu den zwei oder drei Litzen, die für den Zugstrang des Antriebsriemens gemäß WO 2012/143241 A1 genutzt werden, eine verbesserte Beständigkeit des Antriebsriemens gegen Ausspulung des Zugstranges. Überraschend hat sich in mehreren Versuchsreihen auch gezeigt, dass ein enger Bereich für das Verhältnis der Zwirnfaktoren, nämlich zwischen 1,3 und 1,5, zu einer deutlichen Verbesserung der Dauerfestigkeit des Antriebsriemens führt. Der erfindungsgemäße Antriebsriemen kann daher sehr hohen dynamischen Belastungen Stand halten. Insbesondere spulen die Zugstränge auch bei hoher Lastübertragung nicht aus. Im Dauerbelastungstest wurden im Vergleich zu Antriebsriemen aus dem Stand der Technik höhere Laufzeiten erreicht, bevor es zum Ausfall des Riemens (z.B. durch Unterbauausbrüche nach dynamischer Ermüdung und/oder thermische Alterung des Unterbaumaterials) kam. Ein Reißen der Riemen im Betrieb wurde nicht mehr beobachtet.

Besonders gute Eigenschaften des Antriebsriemens werden erreicht, wenn das Verhältnis des Zwirnfaktors der Litzen zum Zwirnfaktor des Kordes zwischen 1,35 und 1,45 beträgt.

Um diese Zwirnfaktoren zu erreichen und darüber hinaus auch die Eigenschaften des Antriebsriemens positiv zu beeinflussen, ist erfindungsgemäß vorgesehen, dass jede Litze eine Drehung zwischen $410 \, \text{m}^{-1}$ und $490 \, \text{m}^{-1}$ aufweist. Die Korde (Ausdrehung) können vorteilhafterweise jeweils eine Drehung zwischen $125 \, \text{m}^{-1}$ und $175 \, \text{m}^{-1}$ aufweisen. Besonders bevorzugt ist es, wenn die Korde jeweils eine Drehung zwischen $150 \, \text{m}^{-1}$ und $170 \, \text{m}^{-1}$ aufweisen.

Versuche mit unterschiedlichen Garnfeinheiten haben darüber hinaus gezeigt, dass die gewünschten hochqualitativen Eigenschaften des Antriebsriemens für den Einsatz im KFZ-Bereich in Riemen-Starter-Generatoranwendungen dann erreicht werden, wenn die Litzen jeweils einen Titer zwischen 800 dtex und 1200 dtex aufweisen. Besonders bevorzugt ist ein Titer von 1100 dtex.

Obwohl die Eigenschaften des Antriebsriemens insbesondere im Hinblick auf die Zugfestigkeit, Dimensionsstabilität und Längssteifigkeit maßgeblich durch das Material und den Aufbau der Zugstränge bestimmt wird, ist es dennoch vorteilhaft, wenn der Grundkörper eine faserhaltige Decklage und/oder faserhaltige Unterbaumischung aufweist. Die Decklage und die faserhaltige Unterbaumischung können jeweils aus einem polymeren Werkstoff mit elastischen Eigenschaften gebildet sein. Besonders bevorzugt ist es, wenn die Decklage und/oder die Unterbaumischung aus einem peroxidisch vernetzten Ethylen-Prophylen-Kautschuk oder einem Ethylen-Prophylen-Dien-Kautschuk gebildet sind.

Die Decklage und die Unterbaumischung können gemeinsam den Grundkörper bilden, vorzugsweise in Form einer vulkanisierten Kautschukmischung, umfassend wenigstens eine Kautschukkomponente und Zusatzstoffe. Als Kautschukkomponente kann insbesondere ein Ethylen-Propylen-Kautschuk, ein Ethylen-Propylen-Dien-Kautschuk, ein (teil)hydrierter Nitrilkautschuk, ein Chloropren-Kautschuk, ein chlorsulfoniertes Polyethylen, ein Fluor-Kautschuk, ein Naturkautschuk, ein Styrol-Butadien-Kautschuk oder Butadien-Kautschuk verwendet werden. Die Kautschukkomponente kann unverschnitten oder mit wenigstens einer weiteren Kautschukkomponente verschnitten sein.

Die Zusatzstoffe können wenigstens einen Vernetzer oder ein Vernetzersystem umfassen. Außerdem können Füllstoffe und/oder Verarbeitungshilfsmittel und/oder ein Weichmacher und/oder ein Alterungsschutzmittel und/oder Fasern und/oder Farbpigmente als Zusatzstoffe eingesetzt werden.

Die Decklage und/oder die Unterbaumischung können Fasern aufweisen, die aus Aramid, Polyester, Polyamid, Poly-P-phenylenbenzobisoxazol, Baumwolle, Leinen, Rayon, Glasfaser, Metallfaser, Silikatfaser oder anderen in der Kautschukindustrie üblichen Fasermaterialen bestehen. Die Fasern können parallel zur Längs- oder Querrichtung der Riemenumfangsrichtung ausgerichtet sein. Möglich ist auch, dass sich die Ausrichtung der Fasern in der Decklage und im Unterbau der Riemen unterscheiden.

Bevorzugt ist es auch, wenn die Zugstränge in einer Zugstranglage zwischen der Decklage und der Unterbaumischung in den Grundkörper eingebettet sind. Dabei können die Decklage und die Unterbaumischung im Herstellungsprozess derart miteinander verbunden werden, dass im Antriebsriemen als Endprodukt die Decklage von der Unterbaumischung nicht mehr unterscheidbar ist. Die Zugstränge können somit vollständig in den einheitlichen Grundkörper eingebettet sein.

Die Zugstränge können grundsätzlich mit einer Streifpräparation versehen und oder mit einem Haftmittel beschichtet sein, um eine Einbettung in den Grundkörper zu erleichtern bzw. zu verbessern.

Besonders bevorzugt ist es, wenn die Zugstrangdichte im Antriebsriemen zwischen 80 und 130 Zugstränge pro 100 mm Riemenbreite beträgt. Insbesondere können zwischen 90 und 120, vorzugsweise zwischen 100 und 110, besonders bevorzugt 105, Zugstränge pro 100 mm Riemenbreite vorgesehen sein. Es hat sich gezeigt, dass eine derartige Zugstrangdichte einen guten Kompromiss zwischen der Zugfestigkeit und Querstabilität des Antriebsriemens bildet.

Bei einer ganz besonders bevorzugten Ausführungsform der Erfindung weisen die Litzen eine Drehung von 450 $m^{-1}$ und die Korde jeweils eine Drehung von 160 $m^{-1}$ auf. Bei dieser Ausführungsform kann insbesondere vorgesehen sein, dass die Litzen jeweils einen Titer von 1100 dtex aufweisen. Der Zugstrang umfasst besonders bevorzugt genau vier Litzen, die jeweils aus einem einzigen verzwirnten Garn gebildet sind. Insofern ist es also bevorzugt, wenn der Zugstrang aus einem Kord 1100x1x4, 450/160 sZ (und/oder zS) gebildet ist. Dabei sind also die Litzen in S-Richtung (und/oder in Z-Richtung) und die Korde jeweils in Z-Richtung (und/oder in S-Richtung) verzwirnt. Bevorzugt werden für erfindungsgemäße Antriebsriemen, insbesondere Keilrippenriemen, zwei Korde mit entgegengesetzten Drehungen (also sZ und zS) in einem Riemen verbaut, wobei im Herstellprozess beide Korde parallel (auf die Decklage) gespult werden.

Ein nebengeordneter Aspekt der Erfindung betrifft die Verwendung eines zuvor beschriebenen Antriebsriemens als Keilrippenriemen in einem Kraftfahrzeugmotor, insbesondere für einen Riemenstartergenerator.

Ferner befasst sich die vorliegende Erfindung mit einem Verfahren zur Herstellung eines zuvor beschriebenen Antriebsriemens, wobei vier Einzelgarne oder Garnbündel jeweils mit einer Drehung zwischen 410 $m^{-1}$ und 490 $m^{-1}$ zur Bildung jeweils einer Litze einzeln verzwirnt, die vier Litzen anschließend zusammengefasst und mit einer entgegengesetzten Drehung zwischen 125 $m^{-1}$ und 175 $m^{-1}$ zu einem Kord verzwirnt werden, wobei für die Litzen jeweils ein Zwirnfaktor $TM_1$ zwischen 4,5 und 5,4 und für die Korde jeweils ein Zwirnfaktor $TM_2$ zwischen 2,7 und 3,8 und ein Verhältnis des Zwirnfaktors der Litzen zum Zwirnfaktor der Korde ($TM_1/TM_2$) zwischen 1,3 und 1,5 eingestellt wird.

Vorzugsweise wird bei einer Ausführungsform des erfindungsgemäßen Herstellungsverfahrens für die vier Litzen jeweils eine Drehung von 450 $m^{-1}$ und für die Korde eine Drehung von 160 $m^{-1}$ eingestellt.

Die Erfindung wird im Folgenden anhand eines Ausführungsbeispiels unter Bezugnahme auf die beigefügten, schematischen Zeichnungen näher erläutert. Darin zeigen

Fig. 1   einen Teilquerschnitt durch einen erfindungsgemäßen Antriebsriemen nach einem bevorzugten Ausführungsbeispiel;

Fig. 2   eine Rollenanordnung eines Mildhybridtests für den Antriebsriemen nach Fig. 1; und

Fig. 3   eine Rollenanordnung eines Konstanthochlasttests für den Antriebsriemen nach Fig. 1.

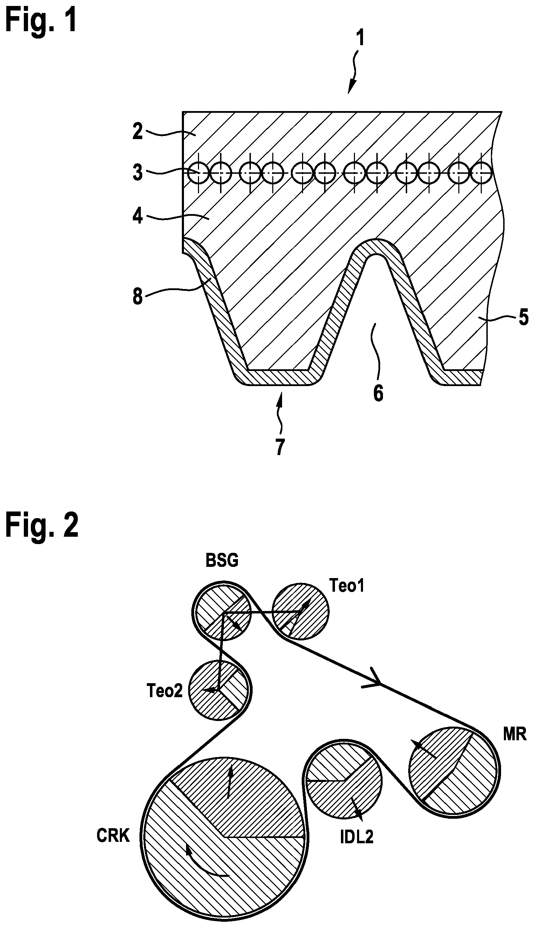

In Fig. 1 ist ein Antriebsriemen im Teilschnitt zu sehen, der einen Grundkörper aufweist, welcher aus einer Decklage 2 und einer Unterbaumischung 4 gebildet ist. Zwischen der Decklage 2 und der Unterbaumischung 4 erstreckt sich eine Zugstranglage aus mehreren Zugsträngen 3. Die Zugstränge 3 sind vorzugsweise parallel zueinander angeordnet. Es ist auch denkbar, dass die Zugstränge 3 zueinander versetzt angeordnet sind.

Der in Fig. 1 dargestellte Antriebsriemen 1 ist als Keilrippenriemen ausgebildet. Dazu weist der Unterbau 4 mehrere parallel zueinander angeordnete Rippen 5 auf, die durch Rillen 6 voneinander abgegrenzt sind. Die den Zugsträngen 3 bzw. der Decklage 2 gegenüberliegende Seite der Unterbaumischung 3 bildet eine Kraftübertragungsfläche 7, die sich über die Rippen 5 und durch die Rillen 6 erstreckt.

Die Kraftübertragungsfläche 7 kann eine Beschichtung 8 aufweisen. Die Beschichtung 8 kann eine Beflockung, insbesondere mit einem Bauwoll- oder Aramidflock sein. Es ist auch möglich, als Beschichtung 8 eine Textilauflage einzusetzen. Die Textilauflage kann in Form eines Gewebes, Gewirkes oder Gestricks ausgebildet sein. Die Beschichtung 8 bewirkt vorzugsweise einen Verschleißschutz und eine Geräuschdämmung.

Wesentlich für die gegenüber dem Stand der Technik verbesserten Eigenschaften des Antriebsriemens 1 ist die Bildung der einzelnen Zugstränge 3. Vorzugsweise weist jeder Zugstrang 3 wenigstens vier, insbesondere genau vier, Litzen auf. Dabei beträgt der Zwirnfaktor TM1 der Litzen zwischen 4,5 und 5,4 und der Zwirnfaktor TM2 der Korde zwischen 2,7 und 3,8. Insbesondere ist für die Zugstränge 3 bei dem erfindungsgemäßen Antriebriemen 1 vorgesehen, dass das Verhältnis des Zwirnfaktors der Litzen zum Zwirnfaktor der Korde (TM1/TM2) zwischen 1,3 und 1,5, vorzugsweise zwischen 1,35 und 1,45, beträgt.

**EP 4 065 859 B1**

Auf dem Weg zur vorliegenden Erfindung wurden mehreren Keilrippenriemen mit einer faserhaltigen Decklage und einer faserhaltigen Unterbaumischung mit verschiedenen Aramid-Zugsträngen aufgebaut. Die Decklage und/oder die Unterbaumischung bestehen aus peroxidisch vernetzten Ethylen-Propylen-Dien-Kautschuk (EPDM). Als Filamentgarn wurde die Aramidtype T1008 (1100 dtex) der Teijin Limited verwendet. Die Zugstranglage wurde durch paralleles Spulen von 2 Korden mit unterschiedlichen Drehrichtungen (sZ und zS) mit der Konstruktion 1100x1x4 erzeugt. Die Korde waren jeweils mit einer Streifpräparation versehen und mit einem Haftmittel beschichtet.

Bei allen getesteten Antriebsriemen betrug die Zugstrangdichte im Antriebsriemen 105 Zugstränge pro 100 mm Riemenbreite. Es wurden unterschiedlich breite Antriebsriemen vom Ausgangsschlauch abgestochen bzw. geschnitten und die Schnittkanten optisch bewertet. Die Länge der Antriebsriemen betrug jeweils etwa 1.200 mm. Außerdem wurden die Antriebsriemen in einem Mildhybridtest und einem Konstanthochlasttest auf dynamische Lebensdauer getestet sowie die Beständigkeit gegen Ausspulen der Zugstränge bewertet.

Konkret wurden die Antriebsriemen jeweils einem Mildhybridtest (CT Mild Hybrid Test, 6PK1196) und einem Konstanthochlasttest (Constant High Load Test, 4PK1196) unterzogen.

Beim Mildhybridtest verläuft der Antriebsriemen abwechselnd mit seiner Decklage und seiner Unterbaumischung über sechs Rollen, die unterschiedliche Durchmesser aufweisen. Die Anordnung der Rollen beim Mildhybridtest zeigt Fig. 2. Eine Antriebsrolle BSG bringt nach einem festgelegten Testzyklus ein Drehmoment auf den Antriebsriemen auf. Jeder Testzyklus und umfasst einen Startabschnitt, einen Boost-Abschnitt, einen Rekuperationsabschnitt und einen Grundlastabschnitt. Die Gesamtdauer des Testzyklus beträgt 20 Sekunden. Bei den Start- und Boost-Abschnitten des Testzyklus wirkt die Antriebsscheibe beschleunigend auf den Riemen, während sie im Rekuperationsabschnitt und im Grundlastabschnitt den Riemen bremst.

Der Startabschnitt ist vergleichsweise kurz, wobei jedoch ein hohes Drehmoment der Generatorscheibe, insbesondere etwa 60 Nm, auf den Antriebsriemen wirkt. Im länger andauernden Boost-Abschnitt wirkt ein schwächeres Drehmoment auf den Riemen. Es beträgt nur etwa die Hälfte des Start-Drehmoments, also etwa 30 Nm. Der Rekuperationsabschnitt dauert ähnlich lange wie der Boost-Abschnitt, wobei das Drehmoment etwa -30 Nm, beträgt. Der längste Abschnitt ist der Grundlastabschnitt, bei welchem ein Drehmoment von etwa -5 Nm konstant gehalten wird. Die Umgebungstemperatur während des Mildhybridtests wurde auf 130 °C eingestellt.

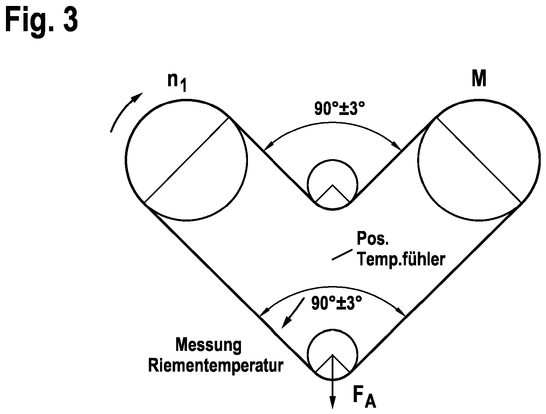

Beim Konstanthochlasttest läuft der Antriebsriemen abwechselnd mit seiner Decklage und seiner Unterbaumischung über vier Rollen, wobei eine Antriebsrolle bei einer Rotationsgeschwindigkeit von 5000 Umdrehungen pro Minute ein konstantes Drehmoment von 20 Nm aufbringt. Die Anordnung der Rollen beim Mildhybridtest zeigt Fig. 3. Die Umgebungstemperatur während des Konstanthochlasttests wurde auf 100 °C eingestellt.

Alle Antriebsriemen wurden denselben Tests ausgesetzt, wobei der Testzyklus so lange wiederholt wurde, bis der Antriebsriemen gerissen ist oder die Zugstränge aus dem Antriebsriemen ausgespult wurden oder der Unterbau des Riemens mindestens 3 Anbrüche oder einem Ausbruch aufwies. Die Testergebnisse sind aus der nachfolgenden Tabelle ersichtlich, wobei der Antriebsriemen mit dem Versuchskord Nr. 6 erfindungsgemäß aufgebaut ist. Mit diesen Antriebsriemen wurden insgesamt die besten Ergebnisse erzielt. Dies ist deutlich an den Endlaufzeiten in den verschiedenen Tests erkennbar. Die Vergleichsantriebsriemen konnten derart lange Testlaufzeiten nicht erreichen.

| Versuchskord | Drehung Vorzwim TM1 [m$^{-1}$] | Drehung Auszwim TM2 [m$^{-1}$] | Drehfaktor Vorzwim TM1 | Drehfaktor Auszwirn TM2 | Quotient TM1/TM2 | CT Mild Hybrid Test, 6PK1196, Laufzeit [h] | Constant High Load Test, 4Pk1196, Laufzeit [h] | Optische Bewertung Schnittkante |
|---|---|---|---|---|---|---|---|---|
| Solllaufzeit | | | | | | > 150 h | > 70 h | |
| 1 | 270 | 270 | 2,96 | 5,91 | 0,50 | 74...84 h | 38...48h | + |
| 2 | 300 | 105 | 3,28 | 2,30 | 1,43 | 74... 94 h | 124...163 h | - |
| 3 | 360 | 126 | 3,94 | 2,76 | 1,43 | 50...291 h | 161...18 2h | o |
| 4 | 360 | 200 | 3,94 | 4,38 | 0,90 | - | 58...64 h | + |
| 5 | 450 | 100 | 4,93 | 2,19 | 2,25 | 164...40 0 h | 8...63 h | - |
| 6 | 450 | 160 | 4,93 | 3,50 | 1,41 | 224...42 1 h | 74...184 h | + |
| 7 | 450 | 190 | 4,93 | 4,16 | 1,18 | 44...96 h | 1...20 h | + |

**EP 4 065 859 B1**

Insbesondere der Versuchskord Nr. 5, der ein Zwirnfaktorverhältnis gemäß WO 2006/102641 A1 aufweist, zeigt eine deutliche Abweichung in den Endlaufzeiten der beiden Tests, insbesondere beim Konstanthochlasttest, sowie eine flusenreiche Riemenkante. Mit dem erfindungsgemäßen Antriebsriemen (Versuchskord Nr. 6) werden höhere Endlaufzeiten sowohl im Mildhybridtest, als auch im Konstanthochlasttest erreicht. Zudem zeigt der so gestaltete Antriebsriemen eine sehr flusenarme Schnittkante.

**Bezugszeichenliste**

(Teil der Beschreibung)

1    Antriebsriemen
2    Decklage
3    Zugstrang
4    Unterbaumischung
5    Rippe
6    Rille
7    Kraftübertragungsfläche
8    Beschichtung

**Patentansprüche**

1.  Antriebsriemen (1) mit einem Grundkörper, in den ein oder mehrere Zugstränge (3) aus Para-Aramid in Kordkonstruktion eingebettet sind, wobei jeder Zugstrang (3) gezwirnte Litzen aufweist, die jeweils aus wenigstens einem gezwirnten Garn gebildet sind, und wobei die Drehrichtung der jeweiligen Litze (Vorzwirn) der Drehrichtung des Kordes (Auszwirn) entgegengesetzt ist, wobei die Zugstränge (3) jeweils wenigstens vier Litzen aufweisen, wobei der Zwirnfaktor $TM_1$ der Litzen (Vorzwirn) zwischen 4,5 und 5,4 und der Zwirnfaktor $TM_2$ des Kordes (Auszwirn) zwischen 2,7 und 3,8 und das Verhältnis des Zwirnfaktors der Litzen zum Zwirnfaktor des Kordes ($TM_1/TM_2$) zwischen 1,3 und 1,5 beträgt, **dadurch gekennzeichnet, dass** die Litzen eine Drehung (Vorzwirn) zwischen 410 m$^{-1}$ und 490 m$^{-1}$ aufweisen.

2.  Antriebsriemen (1) nach Anspruch 1,
    **dadurch gekennzeichnet, dass**
    das Verhältnis des Zwirnfaktors der Litzen zum Zwirnfaktor der Korde ($TM_1/TM_2$) zwischen 1,35 und 1,45 beträgt.

3.  Antriebsriemen (1) nach Anspruch 1 oder 2,
    **dadurch gekennzeichnet, dass**
    die Korde jeweils eine Drehung (Auszwirn) zwischen 125 m$^{-1}$ und 175 m$^{-1}$ aufweist.

4.  Antriebsriemen (1) nach einem der vorhergehenden Ansprüche,
    **dadurch gekennzeichnet, dass**
    die Korde jeweils eine Drehung (Auszwirn) zwischen 150 m$^{-1}$ und 170 m$^{-1}$ aufweisen.

5.  Antriebsriemen (1) nach einem der vorhergehenden Ansprüche,
    **dadurch gekennzeichnet, dass**
    die Litzen jeweils einen Titer zwischen 800 dtex und 1200 dtex, insbesondere 1100 dtex, aufweisen.

6.  Antriebsriemen (1) nach einem der vorhergehenden Ansprüche,
    **dadurch gekennzeichnet, dass**
    der Grundkörper eine faserhaltige Decklage (2) und eine faserhaltige Unterbaumischung (4) aufweist, die jeweils aus einem polymeren Werkstoff mit elastischen Eigenschaften, vorzugsweise aus einem peroxidisch vernetzten Ethylen-Propylen-Kautschuk oder Ethylen-Propylen-Dien-Kautschuk, gebildet sind.

7.  Antriebsriemen (1) nach Anspruch 7,
    **dadurch gekennzeichnet, dass**
    die Zugstränge (3) in einer Zugstranglage zwischen der Decklage (2) und der Unterbaumischung (4) in den Grundkörper eingebettet sind.

**8.** Antriebsriemen (1) nach einem der vorhergehenden Ansprüche,
**dadurch gekennzeichnet, dass**
die Zugstränge (3) mit einer Streifpräparation versehen und/oder mit einem Haftmittel beschichtet sind.

**9.** Antriebsriemen (1) nach einem der vorhergehenden Ansprüche,
**dadurch gekennzeichnet, dass**
eine Zugstrangdichte zwischen 80 und 130, insbesondere zwischen 90 und 120, insbesondere zwischen 100 und 110, vorzugsweise 105, Zugstränge pro 100 mm Riemenbreite beträgt.

**10.** Antriebsriemen (1) nach einem der vorhergehenden Ansprüche,
**dadurch gekennzeichnet, dass**
der Riemen ein Keilrippenriemen ist.

**11.** Antriebsriemen (1) nach einem der vorhergehenden Ansprüche,
**dadurch gekennzeichnet, dass**
die Litzen eine Drehung von 450 m$^{-1}$ und die Korde jeweils eine Drehung von 160 m$^{-1}$ aufweisen.

**12.** Verwendung eines Antriebsriemens nach einem der vorhergehenden Ansprüche als Keilrippenriemen in einem Kraftfahrzeugmotor, insbesondere für einen Riemen-Starter-Generator.

**13.** Verfahren zur Herstellung eines Zugstrangs für einen Antriebsriemen nach einem der Ansprüche 1 bis 11, wobei vier Garne oder Garnbündel jeweils mit einer Drehung (Vorzwirn) zwischen 410 m$^{-1}$ und 490 m$^{-1}$ zur Bildung jeweils einer Litze einzeln verzwirnt, die vier Litzen anschließend zusammengefasst und mit einer entgegengesetzten Drehung (Auszwirn) zwischen 125 m$^{-1}$ und 175 m$^{-1}$ zu einem Kord verzwirnt werden, wobei für die Litzen jeweils ein Zwirnfaktor TM1 zwischen 4,5 und 5,4 und für den Kord jeweils ein Zwirnfaktor TM$_2$ zwischen 2,7 und 3,8 und ein Verhältnis des Zwirnfaktors der Litzen zum Zwirnfaktor des Kordes (TM$_1$/TM$_2$) zwischen 1,3 und 1,5 eingestellt wird.

**14.** Verfahren nach Anspruch 13, wobei für die vier Litzen jeweils eine Drehung von 450 m$^{-1}$ und für die Korde eine Drehung von 160 m$^{-1}$ eingestellt werden.

**Claims**

**1.** A drive belt (1) having a base body in which one or more tension cords (3) of para-aramid are embedded in cord construction, each strand (3) having twisted strands, each of which is formed of at least one twisted yarn, and wherein the direction of rotation of the respective strand (pre-thread) is opposite to the direction of rotation of the cord (twisting), wherein
the tensile strands (3) each have at least four strands, wherein the thread factor TM1 of the strands (pre-thread) is between 4.5 and 5.4 and the thread factor TM$_2$ of the cord (thread) is between 2.7 and 3.8 and the ratio of the twist factor of the strands to the thread factor of the cord (TM$_1$/TM2) is between 1.3 and 1.5, and where the strands have a twist (pre-thread) between 410 m$^{-1}$ and 490 $^{m-1}$.

**2.** Drive belt (1) according to claim 1,
**characterized in that**
the ratio of the twist factor of the strands to the twist factor of the cords (TM1/TM2) is between 1.35 and 1.45.

**3.** Drive belt (1) according to claim 1 or 2,
**characterized in that**
the cord has one twist (twist) between 125 m$^{-1}$ and 175 $^{m-1}$.

**4.** Drive belt (1) according to any of the preceding claims,
**characterized in**
**that** the cords each have a twist (twisting) between 150 $^{m-1}$ and 170 $^{m-1}$.

**5.** Drive belt (1) according to any one of the preceding claims,
**characterized in**
**that** the strands each have a titer between 800 dtex and 1200 dtex, in particular 1100 dtex.

6. Drive belt (1) according to any of the preceding claims
, **characterized**
**in that** the base body has a fibrous top layer (2) and a fibrous substructure compound (4), each of which is formed of a polymeric material having elastic properties, preferably of a peroxide-crosslinked ethylene-propylene rubber or ethylene-propylene-diene rubber.

7. Drive belt (1) according to claim 7,
**characterized in that**
the tension cords (3) are embedded in the base body in a tensile strand position between the top layer (2) and the substructure mixture (4).

8. Drive belts (1) according to any of the preceding claims,
**characterized in that**
the tension cords (3) are provided with a grazing preparation and/or coated with an adhesive agent.

9. Drive belt (1) according to any one of the preceding claims,
**characterized in that**
a tensile cord density between 80 and 130, in particular between 90 and 120, in particular between 100 and 110, preferably 105, is tensile cords per 100 mm belt width.

10. Drive belt (1) according to any of the preceding claims
, **characterized in that the belt is a V-ribbed belt.**

11. Drive belt (1) according to any of the preceding claims,
**characterized in**
**that** the strands have a rotation of 450 $^{m-1}$ and the cords each have a rotation of 160 m-1

12. The use of a drive belt according to any of the preceding claims as a V-ribbed belt in a motor vehicle engine, in particular for a belt-starter-alternator.

13. A method for producing a tensile cord for a drive belt according to any one of claims 1 to 11, wherein four yarns or bundles of yarn are individually twisted with a twist (pre-thread) between 410 $^{m-1}$ and 490 $^{m-1}$ to form a strand each, the four strands are then combined and twisted with an opposite twist (twisting) between 125 $^{m-1}$ and 175 $^{m-1}$ are twisted into a cord, whereby a twist factor TM1 between 4.5 and 5.4 is set for each strand and a TM2 twist factor between 2.7 and 3.8 for the cord and a ratio of the twist factor of the strands to the twist factor of the cord (TM1/TM2) between 1.3 and 1.5.

14. The method of claim 13, wherein a rotation of 450 m-1 is set for each of the four strands and a rotation of 160 m-1 for the cords.

## Revendications

1. Une courroie d'entraînement (1) ayant un corps de base dans lequel une ou plusieurs cordes de tension (3) de para-aramide, sont intégrées dans la construction de la corde, chaque brin (3) ayant des fils torsadés, chacun étant constitué d'au moins un fil torsadé, et où la direction de rotation du fil correspondant (pré-fil) est opposée à la direction de rotation de la corde (torsion), où
les brins de traction (3) ont chacun au moins quatre fils, où le facteur de filetage TM1 des fils (avant filetage) est compris entre 4,5 et 5,4, le facteur de filetage $TM_2$ du fil (fil) est compris entre 2,7 et 3,8, et le rapport entre le facteur de torsion des brins et celui du filetage ($TM_1/TM_2$) est compris entre 1,3 et 1,5, et où les fils ont une torsion (pré-filetage) entre 410 $^{m-1}$ et 490 $^{m-1}$.

2. La courroie d'entraînement (1) selon la revendication 1,
**caractérisée par**
le rapport entre le facteur de torsion des brins et celui des câbles (TM1/TM2) est compris entre 1,35 et 1,45.

3. La courroie d'entraînement (1) selon la revendication 1 ou 2,
**caractérisée par**

le fait que la corde a une torsion (torsion) entre 125 $m^{-1}$ et 175 $m^{-1}$.

4. Courroie d'entraînement (1) selon toutes les affirmations précédentes,
**caractérisée par**
**le fait que** les cordes ont chacune une torsion (torsion) entre 150$m^{-1}$ et 170 $m^{-1}$.

5. Courroie d'entraînement (1) selon chacune des affirmations précédentes,
**caractérisée**
**par le fait que** les brins ont chacun un titre compris entre 800 dtex et 1200 dtex, en particulier 1100 dtex.

6. Courroie d'entraînement (1) selon toutes les affirmations précédentes
, **caractérisée**
**par le fait que** le corps de base possède une couche supérieure fibreuse (2) et un composé de sous-structure fibreuse (4), chacun étant constitué d'un matériau polymère possédant des propriétés élastiques, de préférence en caoutchouc éthylène-propylène réticulé au peroxyde ou en caoutchouc éthylène-propylène-diène.

7. La courroie d'entraînement (1) selon la revendication 7,
**caractérisée par le fait que**
les cordes de tension (3) sont intégrées dans le corps de la base en position de brin de traction entre la couche supérieure (2) et le mélange de sous-structure (4).

8. Les courroies d'entraînement (1) selon toutes les affirmations précédentes,
**caractérisées par le fait**
**que** les cordes de tension (3) sont fournies d'une préparation rasante et/ou recouvertes d'un agent adhésif.

9. La courroie d'entraînement (1) selon chacune des affirmations précédentes,
**caractérisée par**
la densité de cordon de traction entre 80 et 130, en particulier entre 90 et 120, et en particulier entre 100 et 110, de préférence 105, est constituée de cordons de traction pour 100 mm de largeur de courroie.

10. Courroie d'entraînement (1) selon toutes les affirmations précédentes
, **caractérisée par le fait que la courroie est une courroie à nervures en V.**

11. La courroie d'entraînement (1) selon toutes les affirmations précédentes,
**caractérisée par**
**le fait que** les brins ont une rotation de 450 $m^{-1}$ et les cordons ont chacun une rotation de 160 $m^{-1}$.

12. L'utilisation d'une courroie d'entraînement selon toutes les affirmations précédentes comme courroie nervurée en V dans un moteur de véhicule automobile, en particulier pour un alternateur de démarrage à courroie.

13. Une méthode pour produire une corde de traction pour une courroie d'entraînement selon l'une des revendications 1 à 11, où quatre fils ou faisceaux de fils sont torsadés individuellement avec une torsion (pré-filetage) entre 410 $m^{-1}$ et 490 $m^{-1}$ pour former chacun un fil, les quatre brins étant ensuite combinés et torsadés avec une torsion opposée (torsion) entre 125 $m^{-1}$ et 175 $m^{-1}$ sont torsadées en une corde, où un facteur de torsion TM1 entre 4,5 et 5,4 est fixé pour chaque brins et un facteur de torsion TM2 entre 2,7 et 3,8 pour le cordon, et un rapport entre le facteur de torsion des brins et le facteur de torsion du cordon (TM1/TM2) entre 1,3 et 1,5.

14. La méthode de la revendication 13, dans laquelle une rotation de 450 m-1 est fixée pour chacun des quatre brins et une rotation de 160 m-1 pour les cordes.

## Fig. 1

## Fig. 2

# Fig. 3

$n_1$

M

90°±3°

Pos.
Temp.fühler

90°±3°

Messung
Riementemperatur

$F_A$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006102641 A1
- WO 2012143241 A1
- WO 2018074471 A1
- EP 3530783 A1